# EUROPEAN PATENT APPLICATION

(11) **EP 4 583 628 A1**
(43) Date of publication of application: **09.07.2025**
(21) Application number: 23870373.0
(22) Date of filing: 14.09.2023
(51) Int. Cl.: H04W 76/15, H04W 76/27, H04W 76/14

(54) **COMMUNICATION METHOD AND APPARATUS**

(30) Priority: 26.09.2022 CN 202211175067; 25.10.2022 CN 202211310334
(71) Applicant: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN)
(74) Representative: Goddar, Heinz J.
(86) International application number: PCT/CN2023/118891
(87) International publication number: WO 2024/067139

(57) **Abstract**

This application relates to a communication method and apparatus. A remote terminal device receives an RRC reconfiguration message from a first network device, where the RRC reconfiguration message is used to configure an indirect path in a multipath. The remote terminal device sends first information to a relay terminal device, where the first information is used to trigger the relay terminal device to enter an RRC connected state, and the relay terminal device is a device, on the indirect path, configured to provide a relay service for the remote terminal device. In a process of establishing the indirect path, even if the remote terminal device sends an RRC reconfiguration complete message to an access network device through an existing path, the remote terminal device can also send the first information to the relay terminal device. Therefore, even if the relay terminal device does not receive the RRC reconfiguration complete message, the relay terminal device can enter the RRC connected state under triggering of the first information, to provide the relay service for the remote terminal device.

## Description

### CROSS-REFERENCE TO RELATED APPLICATIONS

This application claims priority to Chinese Patent Application No. 202211175067.X, filed with the China National Intellectual Property Administration on September 26, 2022 and entitled "COMMUNICATION METHOD AND APPARATUS", and to Chinese Patent Application No. 202211310334.X, filed with the China National Intellectual Property Administration on October 25, 2022 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

Currently, a remote (remote) user equipment (user equipment, UE) may be connected to a network through a relay (relay) UE, that is, the remote UE communicates with the network through an indirect (indirect) path. In addition, the remote UE may alternatively be connected to the network through a direct (direct) path, that is, the remote UE is directly connected to the network without the relay UE.

To increase a communication capacity of the remote UE, the remote UE is expected to support simultaneous communication on a plurality of paths. For example, one remote UE has established a path 1, and may further continue to establish a path 2. The path 2 is an indirect path. On the path 2, the remote UE communicates with an access network device through a relay UE. In a process of establishing the path 2, the access network device sends a radio resource control (radio resource control, RRC) reconfiguration message to the remote UE, and the remote UE may return an RRC reconfiguration complete message to the access network device. In this case, the remote UE may send the RRC reconfiguration complete message to the access network device through the newly established path 2, or may send the RRC reconfiguration complete message to the access network device through the existing path 1. If the remote UE sends the RRC reconfiguration complete message to the access network device through the path 2, the RRC reconfiguration complete message is sent to the access network device through the relay UE on the path 2. If the relay UE is originally in an RRC idle (idle) state or an RRC inactive (inactive) state, the relay UE can enter an RRC connected (connected) state after receiving the RRC reconfiguration complete message from the remote UE.

However, if the remote UE sends the RRC reconfiguration complete message to the access network device through the path 1, the relay UE on the path 2 cannot receive the RRC reconfiguration complete message. If the relay UE is originally in the RRC idle state or the RRC inactive state, the relay UE cannot enter the RRC connected state, and therefore cannot provide a relay service for the remote UE.

### SUMMARY

Embodiments of this application provide a communication method and apparatus, so that a relay terminal device can enter an RRC connected state.

According to a first aspect, a first communication method is provided. The method may be performed by a remote terminal device, or may be performed by another device including functions of the remote terminal device, or may be performed by a chip system (or a chip) or another functional module. The chip system or the functional module can implement the functions of the remote terminal device, and the chip system or the functional module is, for example, disposed in the remote terminal device. The method includes: receiving an RRC reconfiguration message from a first network device, where the RRC reconfiguration message is used to configure an indirect path in a multipath; and sending first information to a relay terminal device, where the first information is used to trigger the relay terminal device to enter an RRC connected state, and the relay terminal device is a device, on the indirect path, configured to provide a relay service for the remote terminal device.

In this embodiment of this application, the remote terminal device may send the first information to the relay terminal device, to trigger the relay terminal device to enter the RRC connected state. For example, in a process of establishing the indirect path, even if the remote terminal device sends an RRC reconfiguration complete message to an access network device through an existing path, the remote terminal device can also send the first information to the relay terminal device. Therefore, even if the relay terminal device does not receive the RRC reconfiguration complete message, the relay terminal device can enter the RRC connected state under triggering of the first information, so that the relay service can be provided for the remote terminal device.

In an optional implementation, the first information is a direct communication request message, and is used to request to establish a PC5 connection to the relay terminal device. In this embodiment of this application, the direct communication request message sent by the remote terminal device to the relay terminal device may be used as the first information. Therefore, the direct communication request message is not only used to request to establish the PC5 connection to the relay terminal device, but can also be used to trigger the relay terminal device to enter the RRC connected state. Therefore, the remote terminal device does not need to send an additional message to the relay terminal device to trigger the relay terminal device to enter the RRC connected state, so that signaling overheads can be reduced. In addition, the relay terminal device receives the first information earlier. This facilitates the relay terminal device to enter the RRC connected state in a timely manner.

In an optional implementation, the first information includes second information, and the second information indicates that the direct communication request message is used to establish the indirect path in the multipath. The second information indicates the multipath, indicating that path addition instead of path switch is ongoing. In a path addition scenario, the relay terminal device may not be capable of receiving the RRC reconfiguration message used to trigger the relay terminal device to enter the RRC connected state. Therefore, after receiving a DCR including the second information, a relay UE may determine that a purpose of establishing a connection is to establish communication of the multipath. In addition to being used to request to establish the PC5 connection to the relay terminal device, the direct communication request message may also be used to trigger the relay terminal device to enter the RRC connected state. After the relay terminal device receives the second information, if the relay terminal device is in an RRC non-connected state, the relay terminal device may enter the RRC connected state.

In an optional implementation, the second information includes one or more of the following: a service code corresponding to the multipath; a layer 2 identity corresponding to the multipath, where the layer 2 identity is an identity of the relay terminal device; or target user information corresponding to the multipath. The second information may be indicated in an implicit manner, so that the second information not only indicates the multipath, but also implements an original function (for example, used as the layer 2 identity, the service code, or the like) of the second information, so that information utilization can be improved. In addition to the foregoing items, the second information may further include other information. This is not limited herein.

In an optional implementation, the second information includes information about the multipath. The second information may be indicated in an explicit manner. For example, the second information includes the information about the multipath, and the information about the multipath may indicate that the first information is used to establish the multipath. The indication is more explicit in the explicit manner.

In an optional implementation, the method further includes: receiving a discovery message from the relay terminal device, where the discovery message includes the service code and/or the layer 2 identity. The second information sent by the remote terminal device may include the service code and/or the layer 2 identity, and the information included in the second information may be from the discovery message of the relay terminal device.

In an optional implementation, the first information is an SRAP control PDU or an SRAP data PDU received via default configured SL-RLC1; or the first information is a PC5 RRC reconfiguration message used to configure a relay RLC channel of the relay terminal device. The first information may alternatively be implemented in a form of an SRAP control PDU, an SRAP data PDU, a PC5 RRC reconfiguration message, or the like. If the first information is implemented in these forms, the first information may not need to carry additional multipath indication information, and the relay terminal device can determine, based on the first information, that the first information triggers the relay terminal device to enter the RRC connected state.

In an optional implementation, the first information is a 1^{st} piece of information sent to the relay terminal device after the relay terminal device successfully establishes a PC5 connection to the remote terminal device. According to the current technology, after establishing the PC5 connection to the remote terminal device, the relay terminal device may be triggered to enter the RRC connected state if the relay terminal device receives a 1^{st} message (currently, the message is an RRC reconfiguration complete message, but the relay terminal device may not identify a type of the message or the like) from the remote terminal device via the default configured SL-RLC1. Therefore, in this embodiment of this application, implementation logic of the relay terminal device may not be changed as much as possible. To be specific, the remote terminal device still sends the first information to the relay terminal device via the default configured SL-RLC1. If the relay terminal device receives the first information via the default configured SL-RLC1, the relay terminal device may enter the RRC connected state. In this way, the implementation provided in this embodiment of this application can be better compatible with the conventional technology.

In an optional implementation, the method further includes: starting a timer in response to receiving the RRC reconfiguration message, where the timer is used to establish the indirect path; and stopping the timer in response to receiving third information from the relay terminal device, where the third information is an acknowledgement to the first information. In this embodiment of this application, the relay terminal device may send the third information to the remote terminal device, so that the remote terminal device can be triggered to stop the timer, to avoid expiry of the timer.

In an optional implementation, the first information is the direct communication request message, and the third information is a direct communication accept message; or the first information is the SRAP control PDU or the SRAP data PDU received via the default configured SL-RLC1, and the third information is an RLC acknowledgement; or the first information is the PC5 RRC reconfiguration message used to configure the relay RLC channel of the relay terminal device, and the third information is an RLC acknowledgement or a PC5 RRC reconfiguration complete message. In different implementations of the first information, the third information may also have different implementations.

In an optional implementation, the method further includes: starting a timer in response to receiving the RRC reconfiguration message, where the timer is used to establish the indirect path; and stopping the timer in response to receiving fourth information from the relay terminal device. In this embodiment of this application, the relay terminal device may send the fourth information to the remote terminal device, so that the remote terminal device can be triggered to stop the timer, to avoid expiry of the timer.

In an optional implementation, the fourth information is a PC5 RRC message indicating that the relay terminal device has entered the RRC connected state, or the fourth information is a PC5 RRC message indicating that the relay terminal device has been connected to a network device (for example, the access network device), or the fourth information is a PC5 RRC reconfiguration message used by the relay terminal device to configure a PC5 RLC channel of the remote terminal device.

According to a second aspect, a first communication method is provided. The method may be performed by a relay terminal device, or may be performed by another device including functions of the relay terminal device, or may be performed by a chip system (or a chip) or another functional module. The chip system or the functional module can implement the functions of the relay terminal device, and the chip system or the functional module is, for example, disposed in the relay terminal device. The method includes: receiving first information from a remote terminal device, where the first information is used to trigger the relay terminal device to enter an RRC connected state, the relay terminal device is configured to provide a relay service for the remote terminal device, the relay terminal device corresponds to an indirect path of the remote terminal device, and the indirect path is one path in a multipath of the remote terminal device; and if the relay terminal device is in an RRC non-connected state, entering the RRC connected state based on the first information.

In an optional implementation, the first information is a direct communication request message, and is used to request to establish a PC5 connection to the relay terminal device.

In an optional implementation, the first information includes second information, and the second information indicates that the direct communication request message is used to establish the indirect path in the multipath.

In an optional implementation, the second information includes one or more of the following: a service code corresponding to the multipath; a layer 2 identity corresponding to the multipath, where the layer 2 identity is an identity of the relay terminal device; or target user information corresponding to the multipath.

In an optional implementation, the second information includes information about the multipath.

In an optional implementation, the method further includes: sending a discovery message, where the discovery message includes the service code and/or the layer 2 identity.

In an optional implementation, the first information is an SRAP control PDU or an SRAP data PDU received via default configured SL-RLC1; or the first information is a PC5 RRC reconfiguration message used to configure a relay RLC channel of the relay terminal device.

In an optional implementation, the first information is a 1^{st} piece of information from the remote terminal device after the relay terminal device successfully establishes a PC5 connection to the remote terminal device.

In an optional implementation, the method further includes: sending third information to the remote terminal device, where the third information is an acknowledgement to the first information, the third information is used by the remote terminal device to stop a timer, and the timer is used by the remote terminal device to establish the indirect path.

In an optional implementation, the first information is the direct communication request message, and the third information is a direct communication accept message; or the first information is the SRAP control PDU or the SRAP data PDU received via the default configured SL-RLC1, and the third information is an RLC acknowledgement; or the first information is the PC5 RRC reconfiguration message used to configure the relay RLC channel of the relay terminal device, and the third information is an RLC acknowledgement or a PC5 RRC reconfiguration complete message.

In an optional implementation, the method further includes: sending fourth information to the remote terminal device, where the fourth information is used by the remote terminal device to stop a timer, and the timer is used by the remote terminal device to establish the indirect path.

In an optional implementation, the fourth information is a PC5 RRC message indicating that the relay terminal device has entered the RRC connected state, or the fourth information is a PC5 RRC message indicating that the relay terminal device has been connected to a network device (for example, the access network device), or the fourth information is a PC5 RRC reconfiguration message used by the relay terminal device to configure a PC5 RLC channel of the remote terminal device.

For technical effect brought by the second aspect or the optional implementations, refer to the descriptions of the technical effect of the first aspect or the corresponding implementations.

According to a third aspect, a third communication method is provided. The method may be performed by a remote terminal device, or may be performed by another device including functions of the remote terminal device, or may be performed by a chip system (or a chip) or another functional module. The chip system or the functional module can implement the functions of the remote terminal device, and the chip system or the functional module is, for example, disposed in the remote terminal device. The method includes: receiving an RRC reconfiguration message from a first network device, where the RRC reconfiguration message is used to configure an indirect path in a multipath, the RRC reconfiguration message includes information about a first timer, and the information about the first timer is used to configure the multipath; starting the first timer; receiving third information or fourth information from a relay terminal device, where the relay terminal device is a device, on the indirect path, configured to provide a relay service for the remote terminal device; and stopping the first timer based on the received third information or the received fourth information.

In an optional implementation, the fourth information is a PC5 RRC message indicating that the relay terminal device has entered an RRC connected state, or the fourth information is a PC5 RRC message indicating that the relay terminal device has been connected to the network device, or the fourth information is a PC5 RRC reconfiguration message used by the relay terminal device to configure a PC5 RLC channel of the remote terminal device.

In an optional implementation, the third information is acknowledgement information or response information of first information, where the first information is information sent by the remote terminal device to the relay terminal; and if the relay device is in a non-connected state, the first information is used to trigger the relay terminal device to enter the RRC connected state.

For technical effect brought by the third aspect or the optional implementations, refer to the descriptions of the technical effect of the first aspect or the corresponding implementations, and/or refer to the descriptions of the technical effect of the second aspect or the corresponding implementations.

According to a fourth aspect, a communication apparatus is provided. The communication apparatus may be the remote terminal device according to any one of the first aspect to the third aspect. The communication apparatus has functions of the remote terminal device. The communication apparatus is, for example, a remote terminal device, or a large device including the remote terminal device, or a functional module in the remote terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is an umbrella term for these functional modules.

In an optional implementation, the transceiver unit (or the receiving unit) is configured to receive an RRC reconfiguration message from a first network device, where the RRC reconfiguration message is used to configure an indirect path in a multipath; and the transceiver unit (or the sending unit) is configured to send first information to a relay terminal device, where the first information is used to trigger the relay terminal device to enter an RRC connected state, and the relay terminal device is a device, on the indirect path, configured to provide a relay service for the remote terminal device.

In an optional implementation, the transceiver unit (or the receiving unit) is configured to receive an RRC reconfiguration message from a first network device, where the RRC reconfiguration message is used to configure an indirect path in a multipath, the RRC reconfiguration message includes information about a first timer, and the information about the first timer is used to configure the multipath; the processing unit is configured to start the first timer; the transceiver unit (or the receiving unit) is further configured to receive third information or fourth information from a relay terminal device, where the relay terminal device is a device, on the indirect path, configured to provide a relay service for the remote terminal device; and the processing unit is further configured to stop the first timer based on the received third information or the received fourth information.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the remote terminal device according to any one of the first aspect to the third aspect.

According to a fifth aspect, a communication apparatus is provided. The communication apparatus may be the relay terminal device according to any one of the first aspect to the third aspect. The communication apparatus has functions of the relay terminal device. The communication apparatus is, for example, a relay terminal device, or a large device including the relay terminal device, or a functional module in the relay terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the seventh aspect.

In an optional implementation, the transceiver unit (or a receiving unit) is configured to receive first information from a remote terminal device, where the first information is used to trigger the relay terminal device to enter an RRC connected state, the relay terminal device is configured to provide a relay service for the remote terminal device, the relay terminal device corresponds to an indirect path of the remote terminal device, and the indirect path is one path in a multipath of the remote terminal device; and the processing unit is configured to: if the relay terminal device is in an RRC non-connected state, enter the RRC connected state based on the first information.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the functions of the relay terminal device according to any one of the first aspect to the third aspect.

According to a sixth aspect, a communication apparatus is provided. The communication apparatus may be a remote terminal device, or may be a chip or a chip system used in the remote terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the remote terminal device in the foregoing aspects.

According to a seventh aspect, a communication apparatus is provided. The communication apparatus may be a relay terminal device, or may be a chip or a chip system used in the relay terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the relay terminal device in the foregoing aspects.

According to an eighth aspect, a communication system is provided. The communication system includes a remote terminal device and a relay terminal device. The remote terminal device is configured to perform the method performed by the remote terminal device according to any one of the first aspect to the third aspect, and the relay terminal device is configured to perform the method performed by the relay terminal device according to any one of the first aspect to the third aspect. For example, the remote terminal device may be implemented by the communication apparatus according to the fourth aspect or the sixth aspect, and the relay terminal device may be implemented by the communication apparatus according to the fifth aspect or the seventh aspect.

According to a ninth aspect, a computer-readable storage medium is provided. The computer-readable storage medium is configured to store a computer program or instructions. When the computer program or the instructions are run, the method performed by the remote terminal device or the relay terminal device in the foregoing aspects is implemented.

According to a tenth aspect, a computer program product including instructions is provided. When the computer program product is run on a computer, the method according to the foregoing aspects is implemented.

According to an eleventh aspect, a chip system is provided. The chip system includes a processor and an interface. The processor is configured to: invoke instructions from the interface and run the instructions, to enable the chip system to implement the method according to the foregoing aspects.

### BRIEF DESCRIPTION OF DRAWINGS

FIG. 1 is a flowchart of path switch by a remote UE;
FIG. 2 is a flowchart of path establishment by a remote UE;
FIG. 3A to FIG. 3D are diagrams of several application scenarios according to an embodiment of this application;
FIG. 4A to FIG. 4C are flowcharts of several communication methods according to an embodiment of this application;
FIG. 5 is a diagram of an apparatus according to an embodiment of this application; and
FIG. 6 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like. For ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (base transceiver station (base transceiver station, BTS), NodeB, eNodeB/eNB, or gNodeB/gNB), a transmission reception point (transmission reception point, TRP), a subsequently evolved base station in the 3rd generation partnership project (3rd generation partnership project, 3GPP), and an access node, a wireless relay node, a wireless backhaul node, or the like in a wireless fidelity (wireless fidelity, Wi-Fi) system. The base station may be a macro base station, a micro base station, a pico base station, a small cell, a relay station, or the like. A plurality of base stations may support networks of a same access technology, or may support networks of different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, an access network device in a vehicle-to-everything (vehicle-to-everything, V2X) technology may be a road side unit (road side unit, RSU). The following uses an example in which the access network device is a base station for description. The base station may communicate with the terminal device, or may communicate with the terminal device through a relay station. The terminal device may communicate with a plurality of base stations of different access technologies. The core network device is configured to implement functions such as mobility management, data processing, session management, and policy and charging. Names of devices that implement core network functions in systems of different access technologies may be different. This is not limited in embodiments this application. A 5G system is used as an example. The core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be a network device, or may be an apparatus that can support the network device to implement the function, for example, a chip system. The apparatus may be installed in the network device. In the technical solutions provided in embodiments of this application, an example in which the apparatus configured to implement the function of the network device is a network device is used to describe the technical solutions provided in embodiments of this application.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, and are not used to limit sizes, content, sequences, time sequences, priorities, importance, or the like of the plurality of objects. For example, first information and second information may be same information, or may be different information. In addition, such names do not indicate different content, sizes, transmit ends/receive ends, priorities, importance, or the like of the two pieces of information. In addition, step numbers in embodiments described in this application are merely intended to distinguish between different steps, but are not intended to limit a sequence of the steps. For example, S401 may be performed before S402, or may be performed after S402, or may be simultaneously performed with S402.

The technical solutions provided in embodiments of this application may be applied to a 4th generation mobile communication technology (4th generation, 4G) system, for example, a long term evolution (long term evolution, LTE) system, or may be applied to a 5th generation mobile communication technology (5th generation, 5G) system, for example, a new radio (new radio, NR) system, or may be applied to a next generation mobile communication system or another similar communication system, for example, a 6th generation mobile communication technology (6th generation, 6G) system. This is not specifically limited. In addition, the technical solutions provided in embodiments of this application may be applied to a device-to-device (device-to-device, D2D) scenario, for example, an NR-D2D scenario, or may be applied to a vehicle-to-everything (vehicle-to-everything, V2X) scenario, for example, an NR-V2X scenario or a vehicle-to-vehicle (vehicle-to-vehicle, V2V) scenario. Alternatively, the technical solutions provided in embodiments of this application may be applied to fields such as intelligent driving, assisted driving, or intelligent connected vehicles.

The following describes technical features in embodiments of this application.

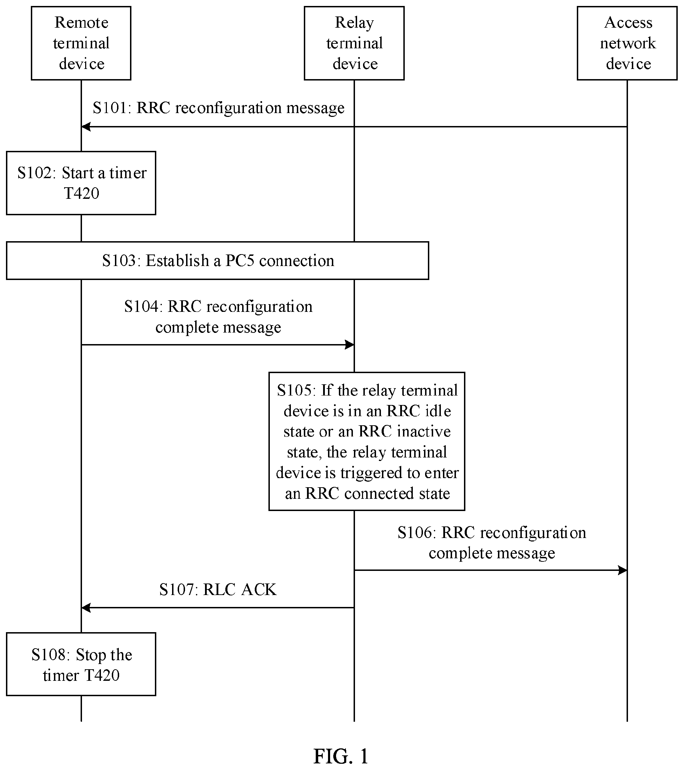

Currently, a remote UE may be connected to a network through a relay UE, that is, the remote UE communicates with the network through an indirect path. In addition, the remote UE may alternatively be connected to the network through a direct path, that is, the remote UE is directly connected to the network without the relay UE. To ensure service continuity of the remote UE, path switch (path switch) performed by the remote UE between the indirect path and the direct path can be supported. For example, the remote UE may switch from the indirect path to the direct path, or may switch from the direct path to the indirect path. FIG. 1 is a flowchart of path switch by a remote UE.

S101: An access network device sends an RRC reconfiguration (RRC reconfiguration) message to the remote UE. Correspondingly, the remote UE receives the RRC reconfiguration message from the access network device. For example, the RRC reconfiguration message indicates that the remote UE needs to perform path switch to the indirect path. The RRC reconfiguration message may include configuration information of a timer T420, and the timer T420 may be used to determine whether the path switch fails.

S102: The remote UE starts the timer T420.

S103: The remote UE establishes a PC5 connection to the relay UE. The relay UE is a relay UE, on the indirect path to which the remote UE is switch, configured to provide a relay service for the remote UE.

S104: The remote UE sends an RRC reconfiguration complete (RRC reconfiguration complete) message to the relay UE. Correspondingly, the relay UE receives the RRC reconfiguration complete message from the remote UE. The remote UE expects to send the RRC reconfiguration complete message to the access network device through the relay UE.

S105: If the relay UE is in an RRC idle state or an RRC inactive state, the relay UE is triggered to enter an RRC connected state.

S106: After entering the RRC connected state, the relay UE sends the RRC reconfiguration complete message from the remote UE to the access network device. Correspondingly, the access network device receives the RRC reconfiguration complete message from the relay UE.

S107: After successfully receiving, via SL-radio link control (radio link control, RLC) RLC1, an RLC service data unit (service data unit, SDU) including the RRC reconfiguration complete message, the relay UE sends an RLC acknowledgement (ACK) to the remote UE. S105 may be performed before S107, or may be performed after S107, or may be simultaneously performed with S107. In addition, S106 may be performed before S107, or may be performed after S107, or may be simultaneously performed with S107.

S108: After receiving the RLC ACK corresponding to the RRC reconfiguration complete message, the remote UE stops the timer T420, to avoid expiry of the timer T420.

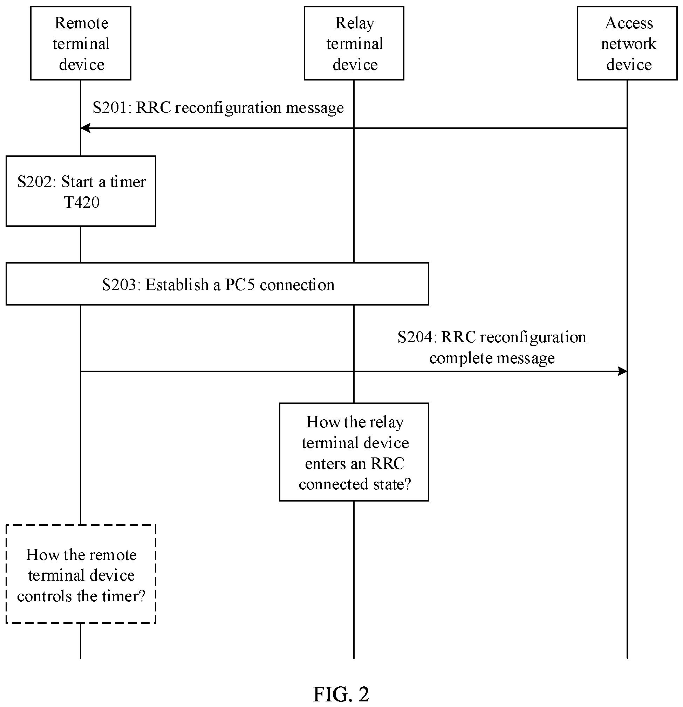

In addition to path switch, to increase a communication capacity of the remote UE, the remote UE is further expected to support simultaneous communication on a plurality of paths. For example, one remote UE has established a path 1, and may further continue to establish a path 2. The path 2 is an indirect path. On the path 2, the remote UE communicates with the access network device through the relay UE. In the path switch procedure shown in FIG. 1, the remote UE sends the RRC reconfiguration complete message to the access network device through the path to which the remote UE is to switch. In a path addition process, the remote UE has established a path, and the remote UE may send the RRC reconfiguration complete message to the access network device through the established path. For example, FIG. 2 is a flowchart of path addition by a remote UE. In FIG. 2, an example in which a path that has been established by the remote UE is a direct path is used.

S201: An access network device sends an RRC reconfiguration message to the remote UE. Correspondingly, the remote UE receives the RRC reconfiguration message from the access network device.

S202: The remote UE starts a timer T420.

S203: The remote UE establishes a PC5 connection to a relay UE. The relay UE is a relay UE, on an indirect path to be added by the remote UE, configured to provide a relay service for the remote UE.

S204: The remote UE sends an RRC reconfiguration complete message to the access network device. Correspondingly, the access network device receives the RRC reconfiguration complete message from the remote UE. Because the path that has been established by the remote UE is a direct path, the remote UE sends the RRC reconfiguration complete message to the access network device through the direct path.

In this case, there is a problem that if the relay UE is in an RRC idle state or an RRC inactive state, how the relay UE enters an RRC connected state.

To resolve this problem, the technical solutions in embodiments of this application are provided. In embodiments of this application, the remote UE may send first information to the relay UE, to trigger the relay UE to enter the RRC connected state. For example, in a process of establishing the indirect path, even if the remote UE sends the RRC reconfiguration complete message to the access network device through an existing path, the remote UE can also send the first information to the relay UE. Therefore, even if the relay UE does not receive the RRC reconfiguration complete message, the relay UE can enter the RRC connected state under triggering of the first information, so that the relay service can be provided for the remote UE.

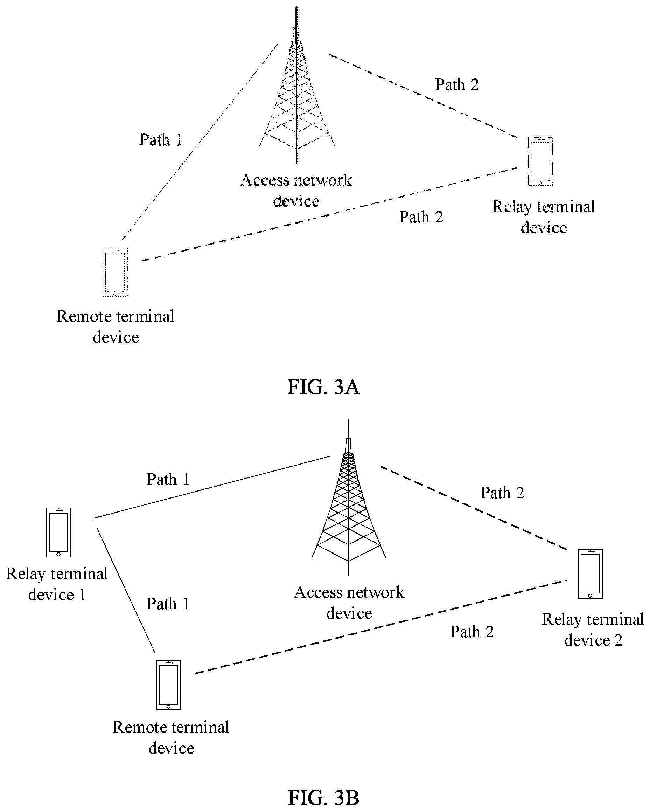

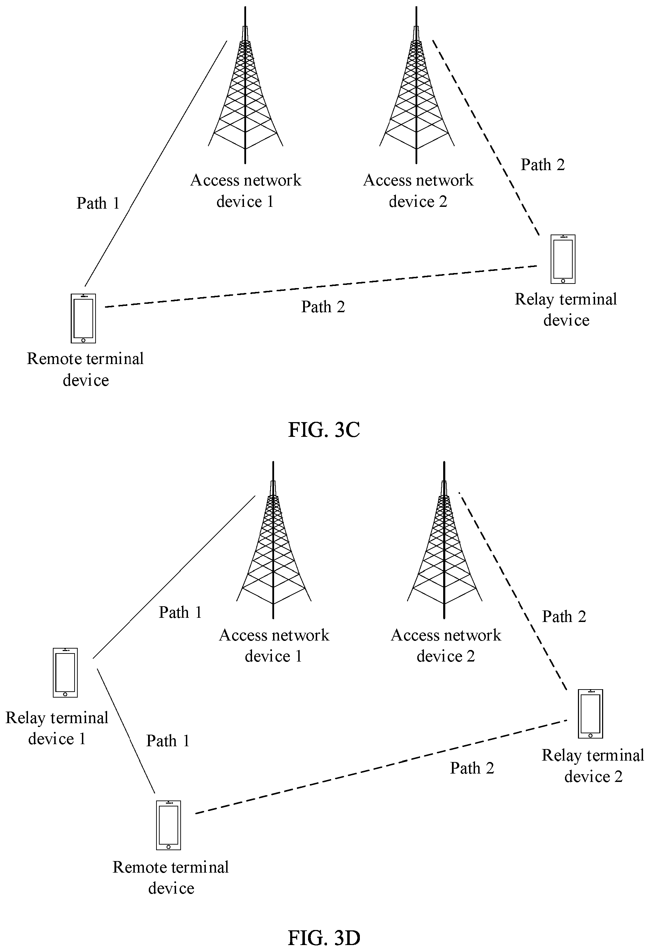

Embodiments of this application are applicable to a scenario in which the remote UE has maintained the path 1 but further needs to add the path 2. FIG. 3A to FIG. 3D are diagrams of several application scenarios according to an embodiment of this application. In FIG. 3A, a remote terminal device is initially connected to an access network device through a direct path (a path 1). In addition, an indirect path (a path 2) that is connected to the access network device through a relay terminal device needs to be newly established (or added). In FIG. 3B, a remote terminal device is initially connected to an access network device (a path 1) through a relay terminal device 1. In addition, another indirect path (a path 2) that is connected to the access network device through a relay terminal device 2 needs to be newly established (or added). FIG. 3A and FIG. 3B are considered as intra-gNB (intra-gNB) path establishment processes. In FIG. 3C, a remote terminal device is initially connected to an access network device 1 through a direct path (a path 1). In addition, an indirect path (a path 2) that is connected to an access network device 2 through a relay terminal device needs to be newly established (or added). In FIG. 3D, a remote terminal device is initially connected to an access network device 1 through a relay terminal device 1 (a path 1). In addition, another indirect path (a path 2) that is connected to an access network device 2 through a relay terminal device 2 needs to be newly established (or added). FIG. 3C and FIG. 3D are considered as inter-gNB (inter-gNB) path establishment processes.

To better describe embodiments of this application, the following describes method provided in embodiments of this application with reference to the accompanying drawings. In the accompanying drawings corresponding to embodiments of this application, all steps represented by dashed lines are optional steps. The method provided in embodiments of this application may be applied to a network architecture shown in any one of the accompanying drawings in FIG. 3A to FIG. 3D. For example, the following remote UE may be the remote terminal device shown in any one of the accompanying drawings in FIG. 3A to FIG. 3D; and the following relay UE may be the relay terminal device shown in FIG. 3A or FIG. 3C, or may be the relay terminal device 2 shown in FIG. 3B or FIG. 3D.

In embodiments of this application, the "direct path" is a path for the remote terminal device to communicate with the access network device (or a cell provided by the access network device) through a Uu interface without using the relay terminal device, and the "indirect path" is a path for the remote terminal device to communicate with the access network device (or the cell provided by the access network device) through the relay terminal device. In addition, a "path" may alternatively be replaced with a "link". For example, the "direct path" may also be referred to as a "direct link", and the "indirect path" may also be referred to as an "indirect link".

In embodiments of this application, a device A sends a message to a device B. For the device B, it may be considered that the message is from the device A. In the sending process, direct sending may be performed, or indirect sending (for example, forwarding through another device) may be performed.

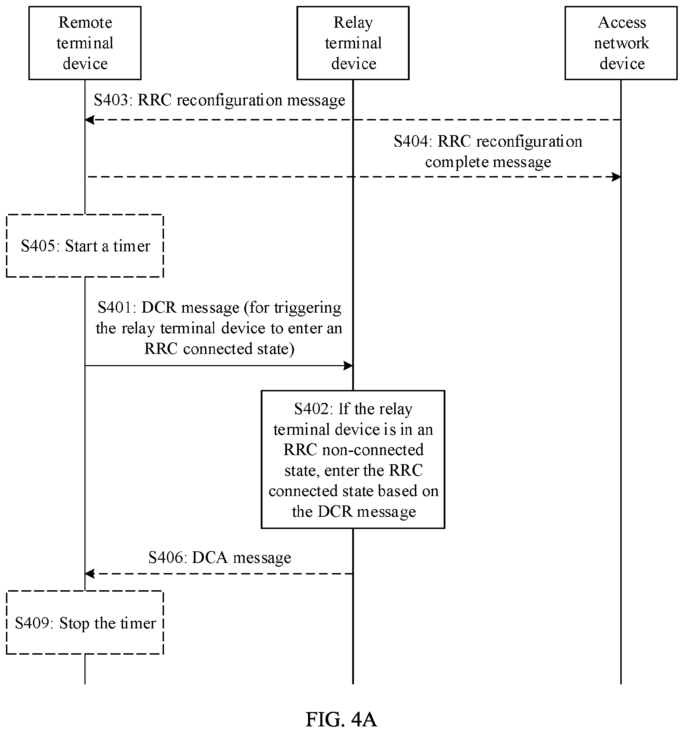

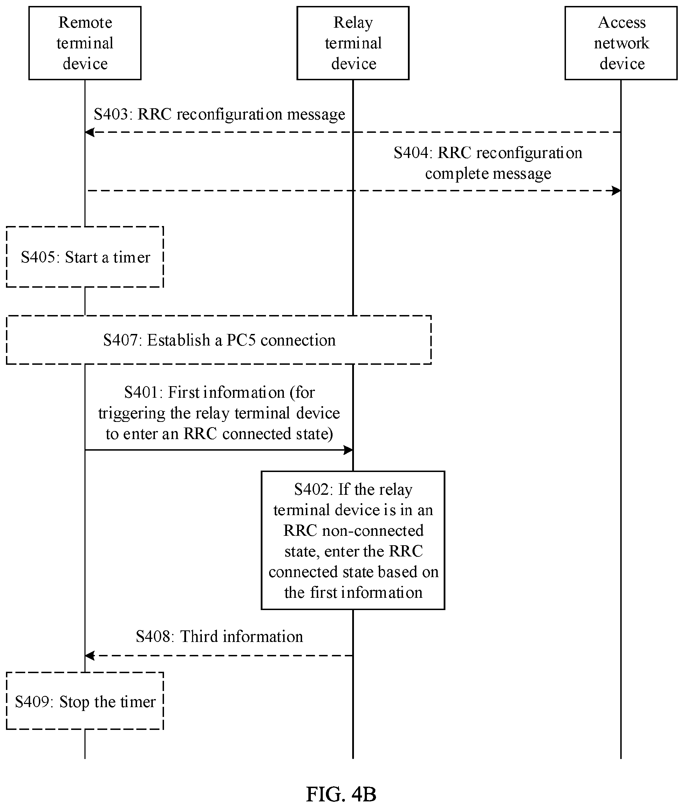

To resolve the technical problem to be resolved in this application, refer to FIG. 4A or FIG. 4B. FIG. 4A and FIG. 4B are two flowcharts of a communication method according to an embodiment of this application. The following remote UE is a remote terminal device in FIG. 4A or FIG. 4B, and the following relay UE is a relay terminal device in FIG. 4A or FIG. 4B.

S401: The remote UE sends first information to the relay UE. Correspondingly, the relay UE receives the first information from the remote UE.

The first information may be used to trigger the relay UE to enter an RRC connected state, or the first information may be used by the relay UE to enter an RRC connected state. It may be understood as that after the relay UE receives the first information, if the relay UE is currently in an RRC non-connected state, the relay UE may enter the RRC connected state. The RRC non-connected state is, for example, an RRC idle state or an RRC inactive state. Alternatively, after the relay UE receives the first information, if the relay UE is currently already in the RRC connected state, the relay UE may remain in the RRC connected state. It may also be understood as that the relay UE does not need to perform any operation used to enter the RRC connected state.

There may be a plurality of implementations of the first information, which are described below by using examples.
1. First optional implementation of the first information.

The first information is a direct communication request (direct communication request, DCR) message. Refer to FIG. 4A. An original function of the DCR message is to request to establish a PC5 connection to the relay UE. The DCR message may be a PC5-signaling (signaling, S) message.

The remote UE needs to establish an indirect path. On the indirect path, the relay UE provides a relay service for the remote UE. Therefore, the remote UE may request to establish the PC5 connection to the relay UE, to communicate with the relay UE. In this embodiment of this application, the DCR message sent by the remote UE to the relay UE may be used as the first information. Therefore, the DCR message is not only used to request to establish the PC5 connection to the relay UE, but also used to trigger the relay UE to enter the RRC connected state. In this way, the remote UE does not need to send an additional message to the relay UE to trigger the relay UE to enter the RRC connected state, so that signaling overheads can be reduced.

Optionally, the DCR message may include second information, and the second information may be used to trigger the relay UE to enter the RRC connected state. For example, the second information may indicate that the DCR is used to request to establish the indirect path in a multipath. The second information indicates that the DCR is used to request to establish the indirect path in the multipath. For example, in an implicit indication manner, the second information indicates that the indirect path corresponding to the relay UE is one path in the multipath (multipath). This is equivalent to implicitly indicating that the remote UE has a plurality of paths. Alternatively, the second information may use an explicit indication manner. For example, the second information directly indicates to request to establish the indirect path in the multipath. This is equivalent to explicitly indicating that the remote UE has a plurality of paths. It may be understood as that the second information indicates the multipath, indicating that path addition instead of path switch is ongoing. In a path addition scenario, the relay UE may not be capable of receiving an RRC reconfiguration message used to trigger the relay UE to enter the RRC connected state (for example, the remote UE may send the RRC reconfiguration message to an access network device through an existing path, and the access network device may be the access network device shown in FIG. 3A or FIG. 3B, or may be the access network device 1 shown in FIG. 3C or FIG. 3D). Therefore, after receiving the DCR including the second information, the relay UE may determine that a purpose of establishing a connection is to establish communication of the multipath. In addition to being used to request to establish the PC5 connection to the relay UE, the DCR message may also be used to trigger the relay UE to enter the RRC connected state. After the relay UE receives the second information, if the relay UE is in the RRC non-connected state, the relay UE may enter the RRC connected state.

The second information may include one or more of the following: information about the multipath, a service code (service code) corresponding to the multipath, a layer 2 (layer 2, L2) identity corresponding to the multipath, or target user information (target user information) corresponding to the multipath. The layer 2 identity is a layer 2 identity of the relay UE.

The second information may be indicated in an explicit manner. For example, the second information includes the information about the multipath, and the information about the multipath may indicate that the DCR is used to establish the multipath. For example, the information about the multipath occupies 1 bit (bit), and the 1 bit may indicate that a purpose of the DCR for establishing a connection is to establish the multipath. Optionally, the information about the multipath may also be referred to as multipath indication information. If the relay UE is in the RRC non-connected state, the relay UE may enter the RRC connected state based on the information about the multipath. In this implementation of the second information, if the DCR includes the second information, it indicates that the DCR requests to establish the PC5 connection through the multipath, or requests to establish the indirect path in the multipath. In this case, the DCR is also used to trigger the relay UE to enter the RRC connected state. If the DCR does not include the second information, it indicates that the DCR requests to establish the PC5 connection through a single path (single path). In this case, the DCR is not used to trigger the relay UE to enter the RRC connected state.

Alternatively, the second information may be indicated in an implicit manner. For example, the second information includes one or more of the service code corresponding to the multipath, the layer 2 identity corresponding to the multipath, or the target user information corresponding to the multipath.

Before the remote UE sends the DCR to the relay UE, the relay UE may broadcast a discovery (discovery) message, and the discovery message may be used by the remote UE to discover the relay UE. For example, the discovery message carries a service code of the relay UE, and the service code of the relay UE may indicate a service supported by the relay UE. In this embodiment of this application, the relay UE may have two types of service codes. One type of service code corresponds to the multipath, and the other type of service code corresponds to a single path. Services indicated by the two types of service codes may be the same. For example, the relay UE has a service code 1 and a service code 2, and the two service codes indicate a same type of service, where the service code 1 corresponds to the multipath, and the service code 2 corresponds to the single path. If the relay UE supports communication of the multipath, the discovery message may carry the service code corresponding to the multipath, and the service code corresponding to the multipath may indicate that the relay UE supports the communication of the multipath. If the relay UE does not support communication of the multipath, the discovery message may carry the service code corresponding to the single path, and the service code corresponding to the single path may indicate that the relay UE does not support the communication of the multipath, or indicate that the relay UE supports communication of the single path. If the discovery message carries the service code corresponding to the multipath, and the remote UE newly establishes a path to perform communication of the multipath, the remote UE may include, in the DCR, the service code that is carried in the discovery message and that corresponds to the multipath, to request to establish the indirect path in the multipath. After receiving the service code, the relay UE may determine that the DCR is used to establish the multipath. If the relay UE is in the RRC non-connected state, the relay UE may enter the RRC connected state based on the service code. In this implementation of the second information, if the DCR includes the service code corresponding to the single path, it indicates that the DCR requests to establish the PC5 connection through the single path. In this case, the DCR is not used to trigger the relay UE to enter the RRC connected state.

The discovery message broadcast by the relay UE may carry the layer 2 identity of the relay UE, and the layer 2 identity is used as a layer 2 source (source) identity (identity, ID) in the discovery message. In this embodiment of this application, the relay UE may have two types of layer 2 identities. One type of layer 2 identity corresponds to the multipath, and the other type of layer 2 identity corresponds to the single path. For example, the relay UE has a layer 2 identity 1 and a layer 2 identity 2, and the two layer 2 identities both indicate the relay UE, where the layer 2 identity 1 corresponds to the multipath, and the layer 2 identity 2 corresponds to the single path. If the relay UE supports communication of the multipath, the discovery message may carry the layer 2 identity corresponding to the multipath, and the layer 2 identity corresponding to the multipath may indicate that the relay UE supports the communication of the multipath. If the relay UE does not support communication of the multipath, the discovery message may carry the layer 2 identity corresponding to the single path, and the layer 2 identity corresponding to the single path may indicate that the relay UE does not support the communication of the multipath, or indicate that the relay UE supports communication of the single path. If the discovery message carries the layer 2 identity corresponding to the multipath, and the remote UE newly establishes a path to perform communication of the multipath, the remote UE may include, in the DCR, the layer 2 identity that is carried in the discovery message and that corresponds to the multipath, to request to establish the indirect path in the multipath. In this case, the layer 2 identity is used as a layer 2 destination (destination) ID in the DCR. After receiving the layer 2 destination ID, the relay UE may determine that the DCR is used to establish the multipath. If the relay UE is in the RRC non-connected state, the relay UE may enter the RRC connected state based on the layer 2 destination ID. In this implementation of the second information, if the DCR includes the layer 2 identity corresponding to the single path, it indicates that the DCR requests to establish the PC5 connection through the single path. In this case, the DCR is not used to trigger the relay UE to enter the RRC connected state.

It can be learned from the foregoing descriptions that the discovery message sent by the relay UE may include the service code and/or the layer 2 identity of the relay UE, so that the remote UE can obtain the service code and/or the layer 2 identity of the relay UE.

The DCR may carry the target user information. Currently, the target user information may indicate a service required by the remote UE, for example, indicate a name of the service required by the remote UE. In this embodiment of this application, the target user information may be associated with the multipath. To be specific, if the DCR carries the target user information, it indicates that the DCR is used to establish the multipath, or is used to request to establish the indirect path in the multipath; or if the DCR does not carry the target user information, it indicates that the DCR is used to establish the single path. If the relay UE determines that the DCR includes the target user information and the relay UE is in the RRC non-connected state, the relay UE may enter the RRC connected state based on the target user information; or if the relay UE determines that the DCR does not include the target user information, it indicates that the DCR requests to establish the PC5 connection through the single path. In this case, the DCR is not used to trigger the relay UE to enter the RRC connected state.

Alternatively, in this embodiment of this application, two different types of target user information may be set, where one type of target user information corresponds to the multipath, and the other type of target user information corresponds to the single path. For example, the relay UE has target user information 1 and target user information 2, and the two pieces of target user information indicate a same type of service, where the target user information 1 corresponds to the multipath, and the target user information 2 corresponds to the single path. If the DCR carries the target user information corresponding to the multipath, it indicates that the DCR is used to establish the multipath; or if the DCR carries the target user information corresponding to the single path, it indicates that the DCR is used to establish the single path. If the relay UE determines that the DCR includes the target user information corresponding to the multipath, and the relay UE is in the RRC non-connected state, the relay UE may enter the RRC connected state based on the target user information; or if the relay UE determines that the DCR includes the target user information corresponding to the single path, it indicates that the DCR requests to establish the PC5 connection through the single path. In this case, the DCR is not used to trigger the relay UE to enter the RRC connected state.

The explicit indication manner and the implicit indication manner above may be separately applied, or may be applied in combination. In addition, the foregoing several implicit indication manners may also be applied in combination or separately. This is not specifically limited.

2. Second optional implementation of the first information. In this implementation, the first information may be sent after a DCR. For example, the remote UE may send the first information to the relay UE after establishing a PC5 connection to the relay UE. Refer to FIG. 4B.

For the remote UE, the first information is, for example, a sidelink relay adaptation protocol (sidelink relay adaptation protocol, SRAP) protocol data unit (protocol data unit, PDU) sent by the remote UE via default configured sidelink (sidelink, SL)-radio link control (radio link control, RLC) 1. Correspondingly, for the relay UE, the first information is the SRAP PDU received by the relay UE via the default configured SL-RLC1. The SRAP PDU is, for example, an SRAP control (control) PDU or an SRAP data (data) PDU. The SRAP control PDU is, for example, information about an SRAP layer. The SRAP data PDU is, for example, the information about the SRAP layer or information about a higher layer of the SRAP layer.

According to the current technology, after establishing the PC5 connection to the remote UE, the relay UE may be triggered to enter the RRC connected state if the relay UE receives a 1^{st} message (currently, the message is an RRC reconfiguration complete message, but the relay UE may not identify a type of the message or the like) from the remote UE via the default configured SL-RLC1. Therefore, in this embodiment of this application, implementation logic of the relay UE may not be changed as much as possible. To be specific, the remote UE still sends the first information to the relay UE via the default configured SL-RLC1. If the relay UE receives the first information via the default configured SL-RLC1, the relay UE may enter the RRC connected state. However, in this embodiment of this application, the first information may be the SRAP PDU instead of an RRC reconfiguration message. In addition, the first information is sent via the default configured SL-RLC1. Because the relay UE has a related default receiving configuration, the relay UE in the RRC inactive state or the RRC idle state can receive the first information, so that the relay UE can be triggered to enter the RRC connected state.

For example, the SRAP layer of the remote UE may generate the SRAP control PDU based on an indication of an RRC layer of the remote UE, and the SRAP control PDU may be used as the first information. Optionally, the SRAP control PDU may not include a bearer (bearer) ID and/or an ID of the remote UE. The bearer ID may indicate a bearer corresponding to data included in the SRAP data PDU, and the SRAP control PDU does not include the data. Therefore, there is no corresponding bearer, and the SRAP control PDU may not include the bearer ID. Alternatively, the SRAP control PDU includes control information, and the control information may also have a corresponding bearer. However, the first information is mainly used to trigger the relay UE to enter the RRC connected state. Therefore, the relay UE does not care about the bearer corresponding to the control information. Therefore, the SRAP control PDU may not include the bearer ID. For the relay UE, if the relay UE receives the SRAP control PDU from the remote UE via the default configured SL-RLC1, and the relay UE is currently in the RRC non-connected state, the relay UE may enter the RRC connected state. Alternatively, if the relay UE receives the SRAP control PDU from the remote UE via the default configured SL-RLC1, the SRAP control PDU does not include the bearer ID and/or the ID of the remote UE, and the relay UE is currently in the RRC non-connected state, the relay UE may enter the RRC connected state.

The ID of the remote UE could be a local (local) ID of the remote UE, and is an ID arranged by the relay UE locally. For example, a remote UE served by one relay UE may have different IDs. The local ID of the remote UE is usually allocated by an access network device. When the remote UE sends the first information to the relay UE, the relay UE has not entered the RRC connected state, and cannot identify the local ID allocated by the access network device to the remote UE. Therefore, the SRAP data PDU may not include the local ID of the remote UE.

For another example, the SRAP layer of the remote UE may generate the SRAP data PDU based on an indication of an RRC layer of the remote UE, and the SRAP data PDU may be used as the first information. Optionally, the SRAP data PDU may not include a payload (payload). For example, the SRAP data PDU includes a payload field, but the payload field is null. This may also be understood as that the SRAP data PDU includes only an SRAP header. Because the SRAP data PDU used as the first information is used to trigger the relay UE to enter the RRC connected state, and is not data to be sent to the relay UE, the payload of the SRAP data PDU may be null. For the relay UE, if the relay UE receives the SRAP data PDU from the remote UE via the default configured SL-RLC1, and the relay UE is currently in the RRC non-connected state, the relay UE may enter the RRC connected state. Alternatively, if the relay UE receives the SRAP data PDU from the remote UE via the default configured SL-RLC1, the payload field of the SRAP data PDU is null and/or the SRAP data PDU includes only the SRAP header, and the relay UE is currently in the RRC non-connected state, the relay UE may enter the RRC connected state.

Optionally, the SRAP control PDU or the SRAP data PDU may further carry first indication information, and the first indication information may indicate the relay UE to enter the RRC connected state, so that the indication is more explicit.

3. Third optional implementation of the first information. In this implementation, the first information may also be sent after a DCR. For example, the remote UE may send the first information to the relay UE after establishing a PC5 connection to the relay UE. Still refer to FIG. 4B.

The first information is a PC5 RRC message, and the PC5 RRC message is used, for example, to configure a relay RLC channel (channel) of the relay UE. For example, the remote UE may configure a receiving configuration on a PC5 interface for the relay UE, and the remote UE may configure the relay UE by using the PC5 RRC message. Because the receiving configuration is a configuration of the PC5 relay RLC channel, and is different from V2X sidelink communication (sidelink communication), the relay UE may determine that the receiving configuration is used to provide a data relay service for the remote UE. Therefore, in this embodiment of this application, a function is newly added to the PC5 RRC message. To be specific, in addition to being used to configure the relay RLC channel of the relay UE, the PC5 RRC message may also be used to trigger the relay UE to enter the RRC connected state. In other words, if the relay UE receives the PC5 RRC message used to configure the relay RLC channel of the relay UE, and the relay UE is currently in the RRC non-connected state, the relay UE may enter the RRC connected state.

Optionally, the PC5 RRC message may further carry second indication information, and the second indication information may indicate the relay UE to enter the RRC connected state, so that the indication is more explicit.

Optionally, the PC5 RRC message is a PC5 RRC reconfiguration message. For distinguishing, the foregoing described RRC reconfiguration message sent by the access network device may be understood as a Uu RRC reconfiguration message.

If the first information is sent after the PC5 connection between the remote UE and the relay UE is established, optionally, the first information may be a 1^{st} message sent by the remote UE to the relay UE after the PC5 connection is established, or the first information may be a 1^{st} message sent by the remote UE to the access network device (the access network device may be the access network device shown in FIG. 3A or FIG. 3B, or may be the access network device 2 shown in FIG. 3C or FIG. 3D) through the relay UE after the PC5 connection is established. For example, after the PC5 connection between the remote UE and the relay UE is established, the 1^{st} message sent by the remote UE to the relay UE is the first information. Regardless of what the first information is (for example, the first information may be an SRAP data PDU, an SRAP control PDU, a PC5 RRC message, or another message), the first information may be used to trigger the relay UE to enter the RRC connected state. Correspondingly, if the relay UE receives the 1^{st} message from the remote UE, regardless of what the 1^{st} message is, if the relay UE is currently in the RRC non-connected state, the relay UE may enter the RRC connected state.

For another example, after the PC5 connection between the remote UE and the relay UE is established, the 1^{st} message sent by the remote UE to the relay UE is the first information. If the first information is an SRAP control PDU sent via default configured SL-RLC1, the first information may be used to trigger the relay UE to enter the RRC connected state. Correspondingly, for the relay UE, if the relay UE receives the SRAP control PDU from the remote UE via the default configured SL-RLC1, and the SRAP control PDU is the 1^{st} message received from the remote UE after the PC5 connection between the remote UE and the relay UE is established, the relay UE may enter the RRC connected state. Alternatively, if the relay UE receives the SRAP control PDU from the remote UE via the default configured SL-RLC1, the SRAP control PDU is the 1^{st} message received from the remote UE after the PC5 connection between the remote UE and the relay UE is established, and the SRAP control PDU does not include a bearer ID and/or an ID of the remote UE, the relay UE may enter the RRC connected state.

For another example, after the PC5 connection between the remote UE and the relay UE is established, the 1^{st} message sent by the remote UE to the relay UE is the first information. If the first information is an SRAP data PDU sent via default configured SL-RLC1, the first information may be used to trigger the relay UE to enter the RRC connected state. For the relay UE, if the relay UE receives the SRAP data PDU from the remote UE via the default configured SL-RLC1, the SRAP data PDU is the 1^{st} message received from the remote UE after the PC5 connection between the remote UE and the relay UE is established, and the relay UE is currently in the RRC non-connected state, the relay UE may enter the RRC connected state. Alternatively, if the relay UE receives the SRAP data PDU from the remote UE via the default configured SL-RLC1, the SRAP data PDU is the 1^{st} message received from the remote UE after the PC5 connection between the remote UE and the relay UE is established, a payload field of the SRAP data PDU is null and/or the SRAP data PDU includes only an SRAP header, and the relay UE is currently in the RRC non-connected state, the relay UE may enter the RRC connected state.

For still another example, after the PC5 connection between the remote UE and the relay UE is established, the 1^{st} message sent by the remote UE to the relay UE is the first information. If the first information is a PC5 RRC message used to configure the relay RLC channel of the relay UE, and the PC5 RRC message is the 1^{st} message received from the remote UE after the PC5 connection between the remote UE and the relay UE is established, the first information may be used to trigger the relay UE to enter the RRC connected state. Correspondingly, if the relay UE receives the PC5 RRC message used to configure the relay RLC channel of the relay UE, the PC5 RRC message is the 1^{st} message received from the remote UE after the PC5 connection between the remote UE and the relay UE is established, and the relay UE is currently in the RRC non-connected state, the relay UE may enter the RRC connected state.

The foregoing describes several implementations of the first information. This embodiment of this application is not limited thereto. Any message that can be used to trigger the relay UE to enter the RRC connected state may be used as the first information in this embodiment of this application.

S402: If the relay UE is in the RRC non-connected state, the relay UE may enter the RRC connected state based on the first information. For example, the relay UE may enter the RRC connected state based on an explicit indication of the first information. Alternatively, if the relay UE determines, based on the first information, that the remote UE is to search for the relay UE used for the multipath, the relay UE may enter the RRC connected state. For a determining process of the relay UE, refer to related descriptions of S401.

If the relay UE is currently already in the RRC connected state, S402 does not need to be performed.

Optionally, because this embodiment of this application relates to a process of adding a path (or newly establishing a path), before S401, steps S403 to S405 may be further included.

S403: The access network device sends the RRC reconfiguration message to the remote UE. Correspondingly, the remote UE receives the RRC reconfiguration message from the access network device. The RRC reconfiguration message may be understood as the Uu RRC reconfiguration message. The access network device may be the access network device shown in FIG. 3A or FIG. 3B, or may be the access network device 1 shown in FIG. 3C or FIG. 3D.

The RRC reconfiguration message may be used to configure the indirect path in the multipath for the remote UE, and the indirect path is a path that needs to be added (or newly established) by the remote UE this time. The "multipath" herein means that after the remote UE adds the indirect path, the remote UE simultaneously maintains a plurality of paths. Before the remote UE adds the indirect path, the remote UE may have maintained a plurality of paths, or may have maintained only a single path. Optionally, the RRC reconfiguration message may include information about a timer, and the timer may be used to determine whether the indirect path is successfully established, or used to determine whether the multipath is successfully configured. The timer is, for example, a timer newly defined in this embodiment of this application. The timer may be used to determine whether path switch fails (or whether path switch succeeds), for example, may be used to determine whether path addition fails (or whether path addition succeeds), or the timer is an existing timer T420.

S404: The remote UE sends the RRC reconfiguration complete message to the access network device. Correspondingly, the access network device receives the RRC reconfiguration complete message from the remote UE. The remote UE may send the RRC reconfiguration complete message to the access network device through the existing path. Therefore, the remote UE does not send the RRC reconfiguration complete message to the access network device through the relay UE (namely, the relay UE described above) on the to-be-added (or newly established) indirect path. The existing path is, for example, a direct path or an indirect path. In FIG. 4A and FIG. 4B, an example in which the existing path is a direct path is used. The access network device and the access network device in S403 are a same access network device.

S405: The remote UE starts the timer.

The remote UE may configure the timer based on information, about the timer, that is included in the RRC reconfiguration message, and start the timer. If the timer times out, it indicates that the indirect path fails to be established, or it indicates that the multipath fails to be configured. In this case, the remote UE may send information to the access network device to indicate that the indirect path fails to be established, or indicate that the multipath fails to be configured. The access network device and the access network device in S403 are a same access network device.

S405 may be performed before S404, or may be performed after S404, or may be simultaneously performed with S404.

If the first information in S401 is the DCR message, refer to FIG. 4A. After S401, the remote UE and the relay UE may alternatively perform a further interaction process, to establish the PC5 connection. Optionally, the method further includes S406 in FIG. 4A. The relay UE sends a direct communication accept (direct communication accept, DCA) message to the remote UE, to indicate that the PC5 connection is successfully established. Correspondingly, the remote UE may receive the DCA message. For example, the relay UE may perform S406 after being in the RRC connected state. The DCA message may be a PC5-S message. S401 and S406 in FIG. 4A may be understood as a process of establishing the PC5 connection (the process may further include another step, for example, the remote UE and the relay UE may establish the PC5 connection through a plurality of interactions, and this is not limited). However, S402 does not belong to the process of establishing the PC5 connection, and it may be considered that a process in which the relay UE enters the RRC connected state may be performed in the process of establishing the PC5 connection.

Alternatively, if the first information in S401 is a message sent after the PC5 connection is established, refer to FIG. 4B. Before S401, the method may further include S407: The remote UE establishes the PC5 connection to the relay UE. After the PC5 connection is established, S401 may be performed.

It can be learned from FIG. 2 that, a technical problem to be resolved in this embodiment of this application is how the relay UE enters the RRC connected state if the remote UE sends the RRC reconfiguration message to the access network device through the existing path. In addition, it can be learned from FIG. 1 that, according to the current technology, the remote UE stops the timer T420 after receiving, from the relay UE, an RLC ACK corresponding to the RRC reconfiguration complete message. In consideration that an indirect path also needs to be established, T420 may be reused in this embodiment of this application. That is, the timer in this embodiment of this application may be T420. Alternatively, a new timer similar to T420 may be introduced in this embodiment of this application. That is, the timer in this embodiment of this application may be a newly introduced timer similar to T420. However, according to FIG. 2, if the remote UE does not send the RRC reconfiguration complete message to the relay UE (or the remote UE does not send the RRC reconfiguration complete message to the access network device through the relay UE), the relay UE does not send the RLC ACK corresponding to the RRC reconfiguration complete message to the remote UE. Therefore, refer to FIG. 2. Another technical problem to be resolved in this embodiment of this application is how the remote UE controls the timer, for example, how to stop the timer.

To resolve the technical problem, in this embodiment of this application, the relay UE may send third information to the remote UE, where the third information is an acknowledgement to the first information or a response to the first information; or the relay UE may send fourth information to the remote UE, where the fourth information may be information actively sent by the relay UE to the remote UE. Correspondingly, the remote UE may receive the third information or the fourth information from the relay UE. Optionally, a process of sending the third information or the fourth information may be performed after S401. The third information or the fourth information may be used by the remote UE to stop the timer. It can be learned from the foregoing that there may be a plurality of implementations of the first information. Correspondingly, there may also be different implementations of the third information. Correspondingly, there may also be different implementations of the fourth information.

In an optional implementation of the third information, the first information is the DCR message, and the third information is the DCA message. For example, in FIG. 4A, the DCA message in S406 may be used as the third information. When receiving the DCA message, or after receiving the DCA message, the remote UE may stop the timer. Alternatively, this is described as that the remote UE stops the timer in response to receiving the DCA message.

In another optional implementation of the third information, the first information is information sent after the PC5 connection is established. As shown in FIG. 4B, the method may further include S408: The relay UE may send the third information to the remote UE. Correspondingly, the remote UE may receive the third information from the relay UE.

For example, if the first information is the SRAP control PDU or the SRAP data PDU that is received by the relay UE via the default configured SL-RLC1 (or the first information is the SRAP control PDU or the SRAP data PDU that is sent by the remote UE via the default configured SL-RLC1), the third information is, for example, the RLC ACK. For example, the SRAP control PDU is transmitted via the default configured SL-RLC1. The SRAP control PDU is included in one or more RLC PDUs. Each time the relay UE successfully receives one of the one or more RLC PDUs, the relay UE may send an RLC ACK to the remote UE. If the one or more RLC PDUs are all successfully received, the relay UE may send one or more RLC ACKs to the remote UE. If the remote UE receives the one or more RLC ACKs, the remote UE determines that the third information is received, and the remote UE may stop the timer. Alternatively, this is described as that the remote UE stops the timer in response to receiving the one or more RLC ACKs. For another example, the SRAP data PDU is transmitted via the default configured SL-RLC1. The SRAP data PDU is included in one or more RLC PDUs. Each time the relay UE successfully receives one of the one or more RLC PDUs, the relay UE may send an RLC ACK to the remote UE. If the one or more RLC PDUs are all successfully received, the relay UE may send one or more RLC ACKs to the remote UE. If the remote UE receives the one or more RLC ACKs, the remote UE determines that the third information is received, and the remote UE may stop the timer. Alternatively, this is described as that the remote UE stops the timer in response to receiving the one or more RLC ACKs. Alternatively, this is described as that the remote UE stops the timer based on the received RLC ACK of the RLC PDU corresponding to the SRAP control PDU or the SRAP data PDU that is sent via the default configured SL-RLC1.

For another example, the first information is the PC5 RRC message used to configure the relay RLC channel of the relay UE, and the third information is, for example, the RLC ACK. For example, the PC5 RRC message is transmitted by an RLC entity, and the PC5 RRC message may be included in one or more RLC PDUs. Each time the relay UE successfully receives one of the one or more RLC PDUs, the relay UE may send an RLC ACK to the remote UE. If the one or more RLC PDUs are successfully received, the relay UE may send one or more RLC ACKs to the remote UE. If the remote UE receives the one or more RLC ACKs, the remote UE determines that the third information is received, and the remote UE may stop the timer. Alternatively, this is described as that the remote UE stops the timer in response to receiving the one or more RLC ACKs. Alternatively, this is described as that the remote UE stops the timer based on the received RLC ACK of the RLC PDU corresponding to the PC5 RRC message.

For still another example, the first information is the PC5 RRC message used to configure the relay RLC channel of the relay UE, and the third information is, for example, a PC5 RRC reconfiguration complete message. For example, the PC5 RRC message is a PC5 RRC reconfiguration message. After receiving the PC5 RRC reconfiguration message, the relay UE may send an RLC ACK to the remote UE. In addition, the relay UE may further perform configuration based on the PC5 RRC reconfiguration message. After the configuration succeeds, the relay UE may send the PC5 RRC reconfiguration complete message to the remote UE, and the PC5 RRC reconfiguration complete message may be used as the third information. When receiving the PC5 RRC reconfiguration complete message or after receiving the PC5 RRC reconfiguration complete message, the remote UE may determine that the relay UE has completed configuration, and may stop the timer. Alternatively, this is described as that the remote UE stops the timer in response to receiving the PC5 RRC reconfiguration complete message.

In an optional implementation of the fourth information, the fourth information is a PC5 RRC message, and may be a new PC5 RRC message or a reused existing PC5 RRC message. This is not limited herein. For example, the fourth information may indicate that the relay UE has entered the RRC connected state, or indicate that the relay UE has completed connection establishment with a network device (for example, the access network device). The remote UE may stop the timer when receiving the fourth information. For another example, the fourth information is a PC5 RRC reconfiguration message used by the relay UE to configure the PC5 RLC channel of the remote UE. For example, the PC5 RRC reconfiguration message includes PC5 RLC configuration information, and the PC5 RLC configuration information is used to configure the PC5 RLC channel of the remote UE. When the remote UE receives the PC5 RLC configuration information from the relay UE (or receives the PC5 RRC reconfiguration message), if the timer is still running, the remote UE may stop the timer. The relay UE configures a downlink PC5 RLC channel for the remote UE, so that the remote UE can determine that the indirect path has been established, and stop the timer.

Optionally, this embodiment of this application may further include S409: The remote UE stops the timer. For example, when receiving the third information or the fourth information or after receiving the third information or the fourth information, the remote UE may stop the timer started in S405. Alternatively, this is described as that the remote UE stops the timer in response to receiving the third information or the fourth information. In this embodiment of this application, the remote UE can stop the timer on an appropriate occasion, to avoid expiry of the timer.

According to the existing solution, the remote UE stops the timer T420 after receiving an RLC ACK of a Uu RRC reconfiguration complete message from the relay UE. Therefore, in this embodiment of this application, the RLC ACK may continue to be the third information (only the RLC ACK does not correspond to the Uu RRC reconfiguration complete message, but corresponds to an RLC ACK of an RLC PDU corresponding to a message in which the third information is located), so that execution logic of the remote UE cannot be changed as much as possible. Alternatively, in this embodiment of this application, the PC5 RRC reconfiguration complete message may also be used as the third information. Because the timer is used to monitor whether the indirect path is successfully established or whether the multipath is successfully configured, if the PC5 RRC reconfiguration complete message is received, it may be considered that the indirect path is successfully established or the multipath is successfully configured. In this case, stopping the timer may make a stop occasion of the timer more accurate.

Alternatively, the timer may be controlled by using another mechanism instead of using the third information or the fourth information. For example, after sending of the first information is completed, the remote UE stops the timer. In this case, the remote UE can stop the timer without waiting for an acknowledgement to the first information, or without determining whether the first information is successfully sent, or without waiting for the relay UE to actively send information (for example, the fourth information). In this mechanism, dependency on a peer device is reduced, and the timer can be effectively controlled.

In conclusion, in a process of establishing the indirect path, even if the remote UE sends the RRC reconfiguration complete message to the access network device through the existing path, the remote UE can also send the first information to the relay UE. Therefore, even if the relay UE does not receive the RRC reconfiguration complete message, the relay UE can enter the RRC connected state under triggering of the first information, so that the relay service can be provided for the remote UE. In addition, the remote UE may further stop the timer based on the first information, the third information, or the fourth information. This reduces a probability that the timer times out, and improves a success rate of path addition. If the remote UE stops the timer based on the first information, it can be learned from the foregoing that, in an implementation, the remote UE may stop the timer based on a sending status of the first information.

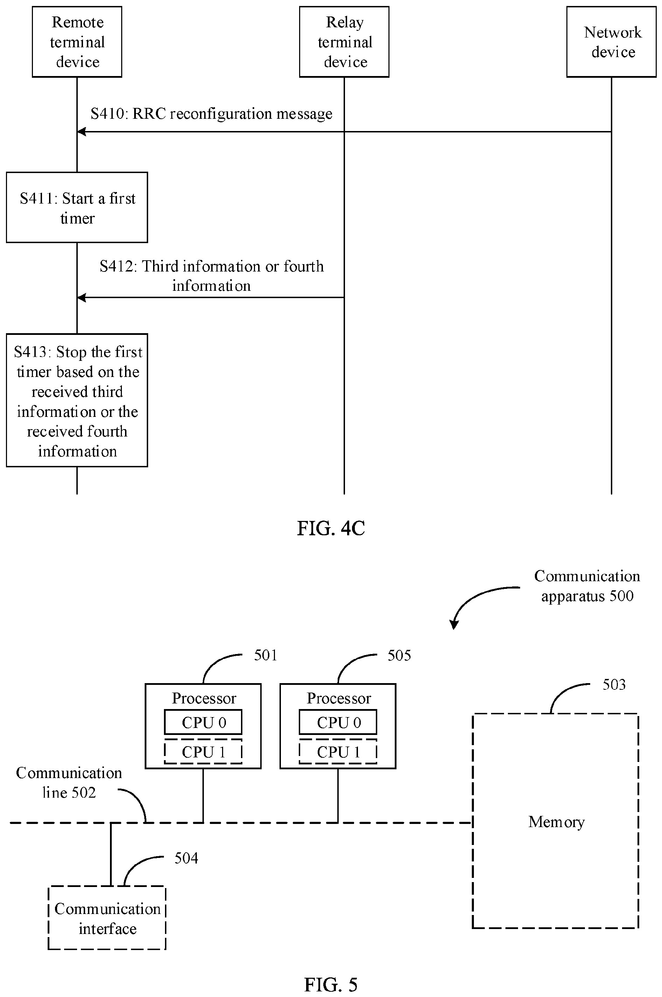

FIG. 4C is a flowchart of another communication method according to an embodiment of this application. The following remote UE is a remote terminal device in FIG. 4C, and the following relay UE is a relay terminal device in FIG. 4C.

S410: A network device sends an RRC reconfiguration message to the remote UE. Correspondingly, the remote UE receives the RRC reconfiguration message from the network device. The network device in this embodiment of this application is, for example, an access network device.

The RRC reconfiguration message may be used to configure an indirect path in a multipath for the remote UE, and the indirect path is a path that needs to be added (or newly established) by the remote UE this time. The "multipath" herein means that after the remote UE adds the indirect path, the remote UE simultaneously maintains a plurality of paths. Before the remote UE adds the indirect path, the remote UE may have maintained a plurality of paths, or may have maintained only a single path. Optionally, the RRC reconfiguration message may include information about a first timer, and the first timer may be used to determine whether the indirect path is successfully established, or used to determine whether the multipath is successfully configured. The first timer is, for example, a timer newly defined in this embodiment of this application. The first timer may be used to determine whether path switch fails (or whether path switch succeeds), for example, may be used to determine whether path addition fails (or whether path addition succeeds), or the first timer is an existing timer T420.

Optionally, after receiving the RRC reconfiguration message, the remote UE may send an RRC reconfiguration complete message to the network device. Correspondingly, the network device receives the RRC reconfiguration complete message from the remote UE. The remote UE may send the RRC reconfiguration complete message to the network device through the existing path. Therefore, the remote UE does not send the RRC reconfiguration complete message to the network device through the relay UE (namely, the relay UE described above) on the to-be-added (or newly established) indirect path. The existing path is, for example, a direct path or an indirect path.

S411: The remote UE starts the first timer.

The remote UE may configure the timer based on information, about the timer, that is included in the RRC reconfiguration message, and start the timer. If the timer times out, it indicates that the indirect path fails to be established, or it indicates that the multipath fails to be configured. In this case, the remote UE may send information to the access network device to indicate that the indirect path fails to be established, or indicate that the multipath fails to be configured. The access network device and the access network device in S403 are a same access network device.

S411 may be performed before the remote UE sends the RRC reconfiguration complete message to the network device, or performed after the remote UE sends the RRC reconfiguration complete message to the network device, or performed simultaneously with the step of sending the RRC reconfiguration complete message to the network device by the remote UE.

S412: The relay UE sends third information to the remote UE. Correspondingly, the remote UE receives the third information from the relay UE. Alternatively, the relay UE sends fourth information to the remote UE. Correspondingly, the remote UE receives the fourth information from the relay UE.

For more content of S412, for example, descriptions of the third information or the fourth information, refer to the embodiment shown in FIG. 4A or FIG. 4B.

S413: The remote UE stops the first timer based on the received third information or the received fourth information.

For example, when receiving the third information or the fourth information or after receiving the third information or the fourth information, the remote UE may stop the first timer started in S411. Alternatively, S413 is described as that the remote UE stops the first timer in response to receiving the third information or the fourth information. In this embodiment of this application, the remote UE can stop the first timer on an appropriate occasion, to avoid expiry of the timer.

To distinguish between the steps in FIG. 4A and FIG. 4B, the steps in this embodiment of this application are numbered from S410. However, this embodiment of this application and the embodiment shown in FIG. 4A and/or FIG. 4B may be independent of each other, and are not combined with each other. For example, S410 is a step in this embodiment of this application, and does not indicate that S410 needs to be performed after a specific step or some specific steps in FIG. 4A or FIG. 4B. For another example, execution of S410 to S413 does not depend on any of the foregoing steps.

Alternatively, this embodiment of this application may be applied in combination with the embodiment shown in FIG. 4A or FIG. 4B. For example, the third information in this embodiment of this application may be an acknowledgement or a response to the first information in the embodiment shown in FIG. 4A or FIG. 4B.

FIG. 5 is a diagram of a structure of a communication apparatus according to an embodiment of this application. The communication apparatus 500 may be the remote UE or a circuit system of the remote UE in the embodiment shown in FIG. 4A, FIG. 4B, or FIG. 4C, and is configured to implement the method corresponding to the remote UE in the foregoing method embodiments. Alternatively, the communication apparatus 500 may be a circuit system of the relay UE in the embodiment shown in FIG. 4A, FIG. 4B, or FIG. 4C, and is configured to implement the method corresponding to the relay UE in the foregoing method embodiments. For specific functions, refer to descriptions of the foregoing method embodiments. For example, a circuit system is a chip system.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent devices, may be located at different physical locations, or may be located on different integrated circuits. Optionally, different processors may be integrated into one or more processors, for example, integrated into one or more integrated circuits.

Optionally, the communication apparatus 500 includes one or more memories 503, configured to store instructions. Optionally, the memory 503 may further store data. The processor and the memory may be separately disposed, or may be integrated together.

Optionally, the communication apparatus 500 includes a communication line 502 and at least one communication interface 504. Because the memory 503, the communication line 502, and the communication interface 504 are all optional, the memory 503, the communication line 502, and the communication interface 504 are all represented by dashed lines in FIG. 5.

Optionally, the communication apparatus 500 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 500 through the antenna. Optionally, the transceiver includes a transmitter machine (transmitter) and a receiver machine (receiver). For example, the transmitter machine may be configured to generate a radio frequency (radio frequency) signal based on a baseband signal, and the receiver machine may be configured to convert the radio frequency signal into the baseband signal.

The processor 501 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 502 may include a path for information transmission between the foregoing components.

The communication interface 504 uses any apparatus such as a transceiver, and is configured to communicate with another device or a communication network, for example, the Ethernet, a radio access network (radio access network, RAN), a wireless local area network (wireless local area network, WLAN), or a wired access network.

The memory 503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (which includes a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory 503 may exist independently, and is connected to the processor 501 through the communication line 502. Alternatively, the memory 503 may be integrated with the processor 501.

The memory 503 is configured to store computer-executable instructions for performing the solutions of this application, and the processor 501 controls execution. The processor 501 is configured to execute the computer-executable instructions stored in the memory 503, to implement the steps performed by the remote UE in the embodiment shown in FIG. 4A, FIG. 4B, or FIG. 4C, or implement the steps performed by the relay UE in the embodiment shown in FIG. 4A, FIG. 4B, or FIG. 4C.

Optionally, the computer-executable instructions in this embodiment of this application may also be referred to as application program code. This is not specifically limited in this embodiment of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 505 shown in FIG. 5. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 5 is a chip, for example, a chip of the remote UE or a chip of the relay UE, the chip includes the processor 501 (which may further include the processor 505), the communication line 502, and the communication interface 504. Optionally, the chip may include the memory 503. Specifically, the communication interface 504 may be an input interface, a pin, a circuit, or the like. The memory 503 may be a register, a cache, or the like. The processor 501 and the processor 505 may be a general-purpose CPU, a microprocessor, an ASIC, or one or more integrated circuits configured to control program execution of the communication method in any one of the foregoing embodiments.

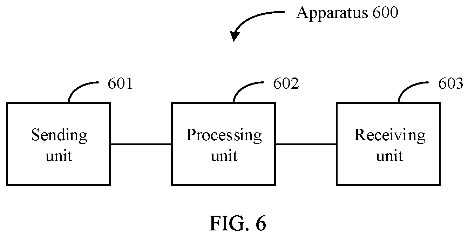

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used. For example, when each functional module is obtained through division based on each corresponding function, FIG. 6 is a diagram of an apparatus. The apparatus 600 may be the remote UE or the relay UE in the foregoing method embodiments, or a chip in the remote UE or a chip in the relay UE. The apparatus 600 includes a sending unit 601, a processing unit 602, and a receiving unit 603.

It should be understood that the apparatus 600 may be configured to implement the steps performed by the remote UE or the relay UE in the communication method in embodiments of this application. For related features, refer to the embodiment shown in FIG. 4A, FIG. 4B, or FIG. 4C. Details are not described herein again.

Optionally, functions/implementation processes of the sending unit 601, the receiving unit 603, and the processing unit 602 in FIG. 6 may be implemented by the processor 501 in FIG. 5 by invoking the computer-executable instructions stored in the memory 503. Alternatively, functions/implementation processes of the processing unit 602 in FIG. 6 may be implemented by the processor 501 in FIG. 5 by invoking the computer-executable instructions stored in the memory 503, and the functions/implementation processes of the sending unit 601 and the receiving unit 603 in FIG. 6 may be implemented by the communication interface 504 in FIG. 5.

Optionally, when the apparatus 600 is a chip or a circuit, the functions/implementation processes of the sending unit 601 and the receiving unit 603 may alternatively be implemented by a pin, a circuit, or the like.

This application further provides a computer-readable storage medium. The computer-readable storage medium stores a computer program or instructions; and when the computer program or the instructions are run, the method performed by the remote UE or the relay UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the remote UE or the relay UE in any one of the foregoing method embodiments.

An embodiment of this application further provides a processing apparatus. The processing apparatus includes a processor and an interface. The processor is configured to perform the method performed by the remote UE or the relay UE in any one of the foregoing method embodiments.

All or some of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, for example, a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and may write information to the storage medium. Optionally, the storage medium may alternatively be integrated into the processor. The processor and the storage medium may be disposed in an ASIC, and the ASIC may be disposed in a terminal device. Optionally, the processor and the storage medium may be disposed in different components of the terminal device.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that, in embodiments of this application, the remote UE or the relay UE may perform a part or all of the steps in embodiments of this application. The steps or operations are merely examples. In embodiments of this application, other operations or variants of various operations may be further performed. In addition, the steps may be performed in a sequence different from a sequence presented in embodiments of this application, and not all operations in embodiments of this application need to be performed.

## Claims

1. A communication method, applied to a remote terminal device, wherein the method comprises:
receiving a radio resource control RRC reconfiguration message from a first network device, wherein the RRC reconfiguration message is used to configure an indirect path in a multipath; and
sending first information to a relay terminal device, wherein the first information is used to trigger the relay terminal device to enter an RRC connected state, and the relay terminal device is a device, on the indirect path, configured to provide a relay service for the remote terminal device.

2. The method according to claim 1, wherein
the first information is a direct communication request message, and is used to request to establish a PC5 connection to the relay terminal device.

3. The method according to claim 2, wherein the first information comprises second information, and the second information indicates that the direct communication request message is used to establish the indirect path in the multipath.

4. The method according to claim 3, wherein the second information comprises one or more of the following:
a service code corresponding to the multipath;
a layer 2 identity corresponding to the multipath, wherein the layer 2 identity is an identity of the relay terminal device; or
target user information corresponding to the multipath.

5. The method according to claim 3, wherein the second information comprises information about the multipath.

6. The method according to claim 4, wherein the method further comprises:
receiving a discovery message from the relay terminal device, wherein the discovery message comprises the service code and/or the layer 2 identity.

7. The method according to claim 1, wherein
the first information is a sidelink relay adaptation protocol SRAP control protocol data unit PDU or an SRAP data PDU received via default configured sidelink SL-radio resource control RLC1; or
the first information is a PC5 RRC reconfiguration message used to configure a relay RLC channel of the relay terminal device.

8. The method according to claim 1 or 7, wherein the first information is a 1^{st} piece of information sent to the relay terminal device after the relay terminal device successfully establishes a PC5 connection to the remote terminal device.

9. The method according to any one of claims 1 to 8, wherein the method further comprises:
starting a timer in response to receiving the RRC reconfiguration message, wherein the timer is used to establish the indirect path; and
stopping the timer in response to receiving third information from the relay terminal device, wherein the third information is an acknowledgement to the first information.

10. The method according to claim 9, wherein
the first information is the direct communication request message, and the third information is a direct communication accept message; or
the first information is the SRAP control PDU or the SRAP data PDU received via the default configured SL-RLC1, and the third information is an RLC acknowledgement; or
the first information is the PC5 RRC reconfiguration message used to configure the relay RLC channel of the relay terminal device, and the third information is an RLC acknowledgement or a PC5 RRC reconfiguration complete message.

11. A communication method, applied to a relay terminal device, wherein the method comprises:
receiving first information from a remote terminal device, wherein the first information is used to trigger the relay terminal device to enter an RRC connected state, the relay terminal device is configured to provide a relay service for the remote terminal device, the relay terminal device corresponds to an indirect path of the remote terminal device, and the indirect path is one path in a multipath of the remote terminal device; and
if the relay terminal device is in an RRC non-connected state, entering the RRC connected state based on the first information.

12. The method according to claim 11, wherein
the first information is a direct communication request message, and is used to request to establish a PC5 connection to the relay terminal device.

13. The method according to claim 12, wherein the first information comprises second information, and the second information indicates that the direct communication request message is used to establish the indirect path in the multipath.

14. The method according to claim 13, wherein the second information comprises one or more of the following:
a service code corresponding to the multipath;
a layer 2 identity corresponding to the multipath, wherein the layer 2 identity is an identity of the relay terminal device; or
target user information corresponding to the multipath.

15. The method according to claim 13, wherein the second information comprises information about the multipath.

16. The method according to claim 14, wherein the method further comprises:
sending a discovery message, wherein the discovery message comprises the service code and/or the layer 2 identity.

17. The method according to claim 11, wherein
the first information is an SRAP control PDU or an SRAP data PDU received via default configured SL-RLC1; or
the first information is a PC5 RRC reconfiguration message used to configure a relay RLC channel of the relay terminal device.

18. The method according to claim 11 or 17, wherein the first information is a 1^{st} piece of information from the remote terminal device after the relay terminal device successfully establishes a PC5 connection to the remote terminal device.

19. The method according to any one of claims 11 to 18, wherein the method further comprises:
sending third information to the remote terminal device, wherein the third information is an acknowledgement to the first information, the third information is used by the remote terminal device to stop a timer, and the timer is used by the remote terminal device to establish the indirect path.

20. The method according to claim 19, wherein
the first information is the direct communication request message, and the third information is a direct communication accept message; or
the first information is the SRAP control PDU or the SRAP data PDU received via the default configured SL-RLC1, and the third information is an RLC acknowledgement; or
the first information is the PC5 RRC reconfiguration message used to configure the relay RLC channel of the relay terminal device, and the third information is an RLC acknowledgement or a PC5 RRC reconfiguration complete message.

21. A communication apparatus, comprising a processor and a memory, wherein the memory is coupled to the processor, and the processor is configured to perform the method according to any one of claims 1 to 10 or the method according to any one of claims 11 to 20.

22. A computer-readable storage medium, wherein the computer-readable storage medium is configured to store a computer program; and when the computer program is run on a computer, the computer is enabled to perform the method according to any one of claims 1 to 10 or the method according to any one of claims 11 to 20.

23. A chip system, wherein the chip system comprises:
a processor and an interface, wherein the processor is configured to invoke instructions from the interface and run the instructions; and when executing the instructions, the processor implements the method according to any one of claims 1 to 10 or the method according to any one of claims 11 to 20.

24. A computer program product, wherein the computer program product comprises a computer program; and when the computer program is run on a computer, the computer is enabled to perform the method according to any one of claims 1 to 10 or the method according to any one of claims 11 to 20.
